# EUROPÄISCHE PATENTSCHRIFT

(11) **EP 4 077 503 B1**
(45) Veröffentlichungstag und Bekanntmachung des Hinweises auf die Patenterteilung: **18.09.2024**
(21) Anmeldenummer: 20835763.2
(22) Anmeldetag: 17.12.2020
(51) Int. Cl.: B29C 44/18, B29C 44/34, B29C 44/44, B29C 67/20, C08J 9/232

(54) **VERFAHREN ZUM VERSCHWEISSEN VON PARTIKELSCHÄUMEN MITTELS PORÖSER HÜLLEN**
METHOD FOR WELDING PARTICULATE FOAMS USING POROUS SLEEVES
PROCÉDÉ DE SOUDAGE DES MOUSSES PARTICULAIRES AU MOYEN DES ENVELOPPES POREUSES

(30) Priorität: 17.12.2019 EP 19216978
(43) Veröffentlichungstag der Anmeldung: 26.10.2022
(73) Patentinhaber: BASF SE, 67056 Ludwigshafen am Rhein (DE)
(72) Erfinder: WONISCH, Andreas, 67056 Ludwigshafen am Rhein (DE); GUTMANN, Peter, 67056 Ludwigshafen am Rhein (DE); WUEST, Andreas, 67056 Ludwigshafen am Rhein (DE); PRISSOK, Frank, 49448 Lemfoerde (DE); AHLERS, Juergen, 68649 Gross-Rohrheim (DE)
(74) Vertreter: BASF IP Association
(86) Internationale Anmeldenummer: PCT/EP2020/086695
(87) Internationale Veröffentlichungsnummer: WO 2021/122937

(56) Entgegenhaltungen:
- DE-A1- 10 036 185
- US-A1- 2008 275 148
- US-A1- 2015 360 401

## Beschreibung

Die vorliegende Erfindung betrifft ein Verfahren zur Herstellung eines Formkörpers (FK), umfassend das Bereitstellen einer dünnwandigen, gasdurchlässigen Hülle; das Befüllen der Hülle mit einem geschäumten Granulat aus einem Polymer (P1) und das Verschweißen des geschäumten Granulats unter Erhalt des Formkörpers (FK). Weiterhin betrifft die vorliegende Erfindung auch Formkörper erhältlich oder erhalten nach einem derartigen Verfahren sowie die Verwendung eines Formkörpers erhältlich oder erhalten nach einem erfindungsgemäßen oder eines erfindungsgemäßen Formkörpers als Schuhsohle, Teil einer Schuhsohle, Matratze, Sitzpolster, Unterlage, Griff, Schutzfolie, als Bauteil im Automobilinnen- und -außenbereich, als Gymnastikmatte, Körperprotektor, ein Auskleidungselement im Automobilbau, ein Schalldämpfer, ein Schwingungsdämpfer, eine Polsterung, ein Fahrradsattel, ein Spielzeug, ein Reifen oder ein Reifenteil oder ein Belag für eine Leichtathletiklaufbahn, eine Sporthalle oder einen Gehweg, eine dämpfende Schicht oder ein dämpfender Kern in einem Sandwichelement oder eine Verpackung.

Formteile aus Partikelschaumstoffen wie z.B. EPS, EPP und ETPU sowie die Methoden zu deren Herstellung sind wohl bekannt. Solche Formteile bestehen in der Regel aus einer Sorte Partikel; die Formteile daraus haben weitgehend gleichverteilte Eigenschaften, es kann aber prozessbedingte, ungewollte Eigenschaftsschwankungen innerhalb eines Formteils geben, z.B. durch zu große Kompression an Engstellen.

Es sind auch Formteile aus Mischungen von Schaumpartikeln bekannt, wie z.B. aus grauem und weißem EPS (sogenannte Dalmatinerschäume). Hier sind die Partikel zufällig im Formteil verteilt, sodass die Eigenschaften und das Aussehen sich gleichmäßig vermischen.

In vielen höherwertigen Anwendungen ist es jedoch wünschenswert, dass die Formteile innerhalb verschiedener Segmente (gezielt) unterschiedliche Eigenschaften aufweisen. Dies wird in der Regel dadurch gelöst, dass Formteilsegmente aus unterschiedlichen Partikelarten separat hergestellt und dann durch Kleben, Schweißen oder Formschluss zu einem Formteil verbunden werden.

Weiterhin ist bekannt, dass zur Herstellung von Formteilen, in denen Segmente unterschiedlicher Eigenschaften gewünscht werden, z.B. Werkzeuge mit Schiebern verwendet werden, die das Füllen unterschiedlicher Kavitäten im Werkzeug, das Herausziehen der separierenden Schieber und anschließende Verschweißung erlauben. JP355228A2 und JP03097529 beschreiben z.B. ein Verfahren mit mehreren Kavitäten.

MX 2006-GT0017 beschreibt das Vorformen expandierbarer EPS Partikel in einem Vorverschäumer und das darauffolgende Verschweißen der beiden vorgeschäumten Segmente in einer Form.

Weiterhin kommen auch Spezial-Verfahren (sog. Crackspalt-Verfahren) zum Einsatz, bei denen die Segmente unterschiedlich verdichtet werden können. Hiermit ist aber die Formteildichte nur in engen Grenzen einstellbar. Verschiedene Farben sind hiermit z.B. nicht einstellbar.

Durch die Verklebung bzw. den Einsatz von Schieberwerkzeugen haben solche Formteile scharf abgegrenzte Eigenschaftszonen, die aber in vielen Anwendungen von Nachteil ist, wie z.B. bei Schuhsohlen. Zudem ist die Herstellung kostenaufwendig, da mehrere Werkzeuge benötigt werden oder komplizierte Schieberwerkzeuge und entsprechend komplexe und teure Formteilautomaten verwendet werden müssen.

Formteile aus verschweißten Partikelschäumen besitzen auch oft den Mangel, dass die Oberfläche des Formteils nicht den technischen Anforderungen oder den Kundenwünschen entspricht. Bedingt durch das Fertigungsverfahren entspricht die Oberfläche und deren Struktur den Schaumpartikeln vor der Verschweißung. Wird eine andere Oberfläche gewünscht als die bei der Verschweißung erzeugte sind aufwändige Verfahren zur Modifikation erforderlich. Z.B. eine Lackierung der Sichtteile, eine Beschichtung mit einem Reaktivsystem oder einem gelösten Elastomer oder die Einbringung des Formteiles in eine zusätzlich zu produzierende Hülle.

Ein anderer Ansatz besteht darin, die losen Schaumpartikel in einen aus einem Vorformling blasgeformten Hohlkörper einzubringen, welcher nach dem Verschweißen eine Hülle oder Haut bildet, wobei die blasgeformten Hohlkörper gas- und insbesondere nicht wasserdampfdurchlässig sind. Dieser Ansatz wird in US 2008/0275148 A1 und US 2015/0360401 A1 verfolgt.

US 2015/0360401 A1 beschreibt eine Methode, um ein Formteil mit einer Oberflächenhaut herzustellen. Die offenbarte Methode beinhaltet das Bereitstellen eines erweichten Vorformlings, das Blasformen des Vorformlings in eine hautartige Hülle, die einen Hohlraum aufweist, das Einfüllen von expandierten Polystyrolpartikeln in den Hohlraum und das Erhitzen der hautartigen Hülle mit den eingefüllten expandierten Polystyrolpartikeln, um ein Formteil mit einer Oberflächenhaut zu erhalten.

US 2008/0275148 A1 bezieht sich auf einen Formkörper aus expandierten Polypropylen-Schaumpartikeln mit einer Oberflächenhaut aus Polypropylen, wobei die Oberflächenhaut auch aus einem blasgeformten Vorformling erzeugt wird.

DE 100 36 185 A1 beschreibt ein Verfahren zur Herstellung eines Werkstoffverbundes aus einem Partikelschaum aus thermoplastischem Kunststoff und wenigstens einer mit dem Schaum verbundenen Schicht, wobei die vorgeschäumten Partikel auf eine Temperatur im Bereich der Schmelztemperatur erhitzt und miteinander zu einem Formkörper verbunden und währenddessen oder danach mit der Schicht verbunden werden. Das offenbarte Verfahren zeichnet sich dadurch aus, dass ein Partikelschaum aus Polyalkylenterephthalat oder einem Blend aus Polyalkylenterephthalat mit einem niedrigem Kristallitanteil in ansonsten amorpher Phase eingesetzt wird, und dass der Partikelschaum bei der Bildung des Formkörpers bzw. des Verbundes mit der Schicht bei einer die amorphen Phase in einen höheren Kristallitanteil umwandelnden Temperatur getempert wird.

Das Ziel der vorliegenden Erfindung besteht darin, expandierte Partikel mit verschiedenen Eigenschaften zielgerichtet in einen Vorformling einzubringen, im Vorformling in Position zu halten oder direkt durch gezieltes Einbringen in das Werkzeug zu positionieren und anschließend ein Formteil aus diesen herzustellen.

Erfindungsgemäß wird diese Aufgabe gelöst durch ein Verfahren zur Herstellung eines Formkörpers (FK), umfassend die Schritte
(i) Bereitstellen einer dünnwandigen, gasdurchlässigen Hülle
(ii) Befüllen der Hülle mit einem geschäumten Granulat aus einem Polymer (P1);
(iii) Verschweißen des geschäumten Granulats unter Erhalt des Formkörpers (FK).

Im Gegensatz zu den bisher bekannten Verfahren, die mehrteilige Fertigung, Verklebung, und die Verwendung von Einlegern umfassen, können durch das erfindungsgemäße Verfahren Prozessschritte eingespart und neue Materialkombinationen, die bisher nicht verfügbar waren, hergestellt werden.

Im Rahmen der vorliegenden Erfindung wird eine dünnwandige, gasdurchlässige Hülle verwendet. Dabei ist die Hülle im Rahmen der vorliegenden Erfindung vorzugsweise porös. Die Hülle ist im Rahmen der vorliegenden Erfindung vorzugsweise so ausgestaltet, dass sie eine Form aufweist, die die gewünschte Form des Formkörpers (FK) vorbildet. Im Rahmen der vorliegenden Erfindung kann die Hülle derart ausgestaltet sein, dass sie Teil des Formkörpers (FK) ist. Gemäß einer alternativen Ausführungsform kann die Hülle derart ausgestaltet sein, dass sie nach Schritt (iii) vom Formkörper (FK) entfernt wird.

Es wurde gefunden, dass Schaumstoffteile hergestellt werden können, indem expandierte Schaumpartikel in eine dampfdurchlässige Hülle eingebracht, positioniert und beim Dampfverschweißen der Partikel mit der Hülle verschweißt werden, die Hülle geht so je nach Art der eingesetzten Hülle eine untrennbare Verbindung mit den Partikeln ein oder kann nach Schritt (iii) vom Formkörper entfernt werden. Durch die Eigenschaften der Hülle können erfindungsgemäß auch die Eigenschaften des Formteils verändert werden.

Das erfindungsgemäße Verfahren umfasst die Schritte (i) bis (iii). Dabei wird zunächst gemäß Schritt (i) eine Hülle aus einem porösen Material bereitgestellt. Gemäß Schritt (ii) wird die Hülle mit einem geschäumten Granulat aus einem Polymer (P1) befüllt. Gemäß Schritt (iii) wird das geschäumte Granulat unter Erhalt des Formkörpers (FK) verschweißt.

Dabei ist es im Rahmen der vorliegenden Erfindung möglich, dass das Verfahren weitere Schritte umfasst, beispielsweise formgebende Schritte oder das Einbringen der Hülle in ein geeignetes Formwerkzeug.

Erfindungsgemäß kann die Hülle aus einem Material bestehen, dass bei dem Verschweißen gemäß Schritt (iii) eine Verbindung mit dem Formkörper eingeht. Es ist im Rahmen der vorliegenden Erfindung jedoch auch möglich, dass die Hülle aus einem Material besteht, dass keine Verbindung mit dem geschäumten Granulat eingeht und nach Schritt (iii) vom Formkörper entfernt wird.

Die Hülle kann beispielsweise aus Kunststoff, Metall, Keramik, Cellulose, Glas oder ähnlichen Materialien bestehen. Die Hülle kann beispielsweise eine Folie, ein Gewebe, ein Gestrick, ein Nonwoven oder ein Vlies sein.

Erfindungsgemäß besteht die Hülle aus einem porösen Material. Erfindungsgemäß ist es bevorzugt, dass die Wasserdampfdurchlässigkeit der Hülle ausreichend ist, um eine gute Verschweißung zu garantieren.

Gemäß einer weiteren Ausführungsform betrifft die vorliegende Erfindung demgemäß auch ein Verfahren zur Herstellung eines Formkörpers wie zuvor beschrieben, wobei die Hülle eine Folie, ein Gewebe, ein Gestrick, ein Netz oder ein gelochtes Metall ist.

Es ist besonders bevorzugt, dass die Hülle so ausgestaltet ist, beispielsweise porös, gewebt, gelocht, oder membranartig ist, dass beim Verschweißen mit Wasserdampf das Medium leicht an die Partikel herangeführt werden kann und es in kurzer Zeit zu einer Verschweißung kommt.

Erfindungsgemäß ist es bevorzugt, dass die Hülle aus einem flexiblen porösen Material besteht. Gemäß einer weiteren Ausführungsform betrifft die vorliegende Erfindung demgemäß auch ein Verfahren zur Herstellung eines Formkörpers wie zuvor beschrieben, wobei die Hülle aus einem flexiblen porösen Material besteht.

Die Hülle kann beispielsweise als Schlauch, Haut, Pelle, Formschlauch oder als verklebter Formling ausgeführt sein.

Sofern die Hülle bei der Herstellung des Formkörpers mit dem geschäumten Granulat verschweißt wird, ist es erfindungsgemäß bevorzugt, dass die Hülle aus dem gleichen Material besteht wie die Partikel des geschäumten Granulats. Das Verfahren ist erfindungsgemäß auch mit unterschiedlichen Materialien umsetzbar, wobei es bevorzugt ist, dass sich die Schmelztemperaturen der Materialien wenig unterscheiden und die Polymere kompatibel zueinander sind.

Gemäß Schritt (ii) wird die Hülle mit dem geschäumten Granulat befüllt. Dabei wird erfindungsgemäß ein Vorformling gebildet. Erfindungsgemäß ist es möglich, dass die Form des Vorformlings durch die Form der Hülle vorgegeben wird. Es ist jedoch auch möglich, dass die Form des Vorformlings vor dem Verschweißen durch ein Formwerkzeug eingestellt wird.

Der Vorformling wird dann gemäß Schritt (iii) ins Werkzeug verbracht und verschweißt. Im Rahmen der vorliegenden Erfindung werden dabei die Partikel des geschäumten Granulats verschweißt und der Formkörper (FK) wird erhalten. Es ist im Rahmen der vorliegenden Erfindung möglich, dass die Hülle mit den Partikeln des geschäumten Granulats verschweißt wird. Ebenso ist es im Rahmen der vorliegenden Erfindung möglich, dass die Hülle derart ausgestaltet ist, dass sie unter den Bedingungen gemäß Schritt (iii) nicht mit dem geschäumten Granulat verschweißt wird, so dass die Hülle nach Schritt (iii) vom Formkörper entfernt werden kann

Erfindungsgemäß ist es möglich, dass durch die Form der Hülle die Form des Formkörpers vorgeformt wird. Ebenso ist es im Rahmen der vorliegenden Erfindung möglich, dass ein Formwerkzeug eingesetzt wird, um die Form des Formkörpers (FK) vorzugeben.

Die Herstellung des Vorformlings kann am Formteilautomaten selbst, in einer der Werkzeugform vorgeschalteten Kammer erfolgen oder der Vorformling wird in einem separaten Schritt erzeugt. Als Kammer oder Behältnis am Formteilautomaten dienen beispielsweise Stahlzylinder.

Erfindungsgemäß ist es möglich, dass die Hülle vor dem Verschweißen gemäß Schritt (iii) verschweißt wird. In diesem Fall wird der Vorformling vorzugsweise verschlossen und dann ins Werkzeug verbracht. Dies kann pneumatisch, hydraulisch, automatisiert oder auch mechanisch erfolgen.

Erfindungsgemäß kann das Verschweißen gemäß Schritt (iii) mittels dem Fachmann an sich bekannten Verfahren erfolgen. Geeignet ist im Rahmen der vorliegenden Erfindung beispielsweise das Verschweißen mit Dampf, beispielsweise Wasserdampf. Gemäß einer weiteren Ausführungsform betrifft die vorliegende Erfindung demgemäß auch ein Verfahren zur Herstellung eines Formkörpers wie zuvor beschrieben, wobei das Verschweißen durch Wasserdampfverschweißung erfolgt.

Geeignete Bedingungen und Apparaturen für die Wasserdampfverschweißung sind dem Fachmann an sich bekannt. Bei der Wasserdampfverschweißung erfolgt die Verschweißung durch Beaufschlagung mit Wasserdampf. Geeignete Verschweißungsparameter sind dem Fachmann an sich bekannt. Erfindungsgemäß werden die Verschweißungsparameter beispielsweise auf die Größe des Formkörpers und das Polymer (P1) abgestimmt. Geeignete Bedampfungszeiten liegen beispielsweise im Bereich von von 1 bis 120 Sekunden je Bedampfungsschritt. Geeignete Dampftemperaturen liegen beispielsweise im Bereich von 100 bis 160°C.

Gemäß einer weiteren Ausführungsform betrifft die vorliegende Erfindung demgemäß auch ein Verfahren zur Herstellung eines Formkörpers wie zuvor beschrieben, wobei die Hülle nach dem Befüllen gemäß Schritt (ii) verschlossen wird.

Gemäß einer Ausführungsform der vorliegenden Erfindung besteht die poröse Hülle aus dem gleichen Polymer wie der Partikelschaum.

Im Rahmen der vorliegenden Erfindung kann die Dicke der Hülle in weiten Bereichen variieren, sofern gewährleistet ist, dass ein Verschweißen der Partikel des geschäumten Granulats möglich ist. Beispielsweise liegt die Dicke der Hülle im Bereich von 1 bis 5000 µm, weiter bevorzugt im Bereich von 2 bis 1000 µm, besonders bevorzugt im Bereich von 5 bis 500 µm, weiter bevorzugt im Bereich von 10 bis 250 µm, insbesondere bevorzugt im Bereich von 20 bis 100 µm.

Gemäß einer alternativen Ausführungsform der vorliegenden Erfindung besteht die Hülle aus einem zu den Partikelschäumen unterschiedlichen Material oder Polymer, das sich auch bei Temperatureinwirkung nicht mit dem Polymer der Partikelschäume verbindet.

Die Hüllen der Vorformlinge können beispielsweise nach dem Verschweißen vom Formkörper abgezogen werden und bedingt durch ihre Ausführung mehrmals wiederverwendet oder im Falle eines Einmalgebrauches verworfen werden. Bevorzugt sind hier wiederverwertbare, stabile Hüllen. Gemäß einer weiteren Ausführungsform betrifft die vorliegende Erfindung demgemäß auch ein Verfahren zur Herstellung eines Formkörpers wie zuvor beschrieben, wobei die Hülle nach dem Verschweißen vom Formkörper entfernt wird.

Erfindungsgemäß ist es auch möglich, dass die Hülle eine vorgebildete Form aufweist, die der Form des gewünschten Formteils entspricht. Ebenso ist es jedoch möglich, dass die Form des Formteils durch die Werkzeugform erzeugt wird und der Vorformling nur als eine Art Träger dient der eine Vermischung der unterschiedlichen Partikel weitgehend verhindert. Vorteilhaft ist es, wenn der Vorformling die Partikel fixieren kann.

Gemäß einer weiteren Ausführungsform betrifft die vorliegende Erfindung demgemäß auch ein Verfahren zur Herstellung eines Formkörpers wie zuvor beschrieben, wobei die Hülle aus einem mit dem geschäumten Granulat verschweißbaren Material besteht.

Gemäß einer weiteren Ausführungsform besteht die poröse Hülle aus dem gleichem Polymer wie das geschäumte Granulat. Damit ist auch gewährleistet, dass die Hülle gut mit dem geschäumten Granulat verschweißbar ist.

Geeignete Polymere (P1) sind dem Fachmann an sich bekannt. Im Rahmen der vorliegenden Erfindung sind insbesondere thermoplastische Elastomere geeignet, beispielsweise thermoplastische Polyurethane, thermoplastische Polyetheramide, Polyetherester, Polyesterester, thermoplastische Elastomere auf Olefinbasis, vernetzte thermoplastische Elastomer auf Olefinbasis bzw. thermoplastische Vulkanisate oder thermoplastische Styrol Butadien-Blockcopolymere. Geeignet sind beispielsweise Polystyrol oder Derivate davon, Polypropylen, Polyethylen, Ethylenpropylendien-Kautschuke (EPDM), Ethylen-Vinylacetat (EVA), Ethylen-Vinylacetat-Copolymere, thermoplastische Polyurethane, Polyamide, Polyester, Polyvinylidenfluoride, Polyetheramide, Polyethylenterephthalate oder Polybutylenterephthalate oder Mischungen und Blends der genannten Polymere. Gemäß einer weiteren Ausführungsform betrifft die vorliegende Erfindung demgemäß auch ein Verfahren zur Herstellung eines Formkörpers wie zuvor beschrieben, wobei das Polymer (P1) ausgewählt ist aus der Gruppe bestehend aus Polystyrol, Polypropylen, thermoplastischen Polyurethanen, Polyamiden, Polyestern, Polyvinylidenfluorid, Polyetheramiden, Polyethylenterephthalate oder Polybutylenterephthalaten oder Mischungen und Blends der genannten Polymere.

Auch geschäumte Granulate aus den genannten Polymeren sind dem Fachmann an sich bekannt. Gemäß einer weiteren Ausführungsform betrifft die vorliegende Erfindung demgemäß auch ein Verfahren zur Herstellung eines Formkörpers wie zuvor beschrieben, wobei der mittlere Durchmesser der Partikel des geschäumten Granulats im Bereich von 0,5 bis 20 mm liegt.

Erfindungsgemäß ist es auch möglich, dass zwei oder mehr verschiedene geschäumte Granulate eingesetzt werden. Dabei kann zum einen das geschäumte Granulat jeweils aus unterschiedlichen Materialien bestehen, solange gewährleistet ist, dass die Partikel der eingesetzten geschäumten Granulate verschweißbar sind. Ebenso ist es möglich, dass sich die Partikel in der Farbe oder Größe unterscheiden. So hergestellte Formteile weisen beispielsweise Zonen unterschiedlicher Eigenschaften auf (z.B. Mechanik, Farbe, PartikelForm, Dichte Dies wird dadurch realisiert, dass die einzelnen Partikel unterschiedlicher Eigenschaften, entsprechend den gewünschten Eigenschaften des Formteils, in dem Vorformling oder der Form positioniert und anschließend fest miteinander z.B. durch Verschweißen verbunden werden. Prinzipiell können erfindungsgemäß expandierte Partikel verwendet werden. Es ist jedoch grundsätzlich auch möglich, Mischungen aus expandierten Partikeln und expandierbaren Partikeln einzusetzen.

Gemäß einer weiteren Ausführungsform betrifft die vorliegende Erfindung demgemäß auch ein Verfahren zur Herstellung eines Formkörpers wie zuvor beschrieben, wobei mindestens ein weiteres geschäumtes Granulat eingesetzt wird. Geeignet sind prinzipiell die als Polymer (P1) eingesetzten Polymer. Im Rahmen der vorliegenden Erfindung sind insbesondere thermoplastische Elastomere geeignet, beispielsweise thermoplastische Polyurethane, thermoplastische Polyetheramide, Polyetherester, Polyesterester, thermoplastische Elastomere auf Olefinbasis, vernetzte thermoplastische Elastomer auf Olefinbasis bzw. thermoplastische Vulkanisate oder thermoplastische Styrol Butadien-Blockcopolymere. Eingesetzt werden können beispielsweise Polystyrol oder Derivate davon, Polypropylen, Polyethylen, Ethylenpropylendien-Kautschuke (EPDM), Ethylen-Vinylacetat (EVA), Ethylen-Vinylacetat-Copolymere, thermoplastische Polyurethane, Polyamide, Polyester, Polyvinylidenfluoride, Polyetheramide, Polyethylenterephthalate oder Polybutylenterephthalate oder Mischungen und Blends der genannten Polymere. Eigenschaften in denen sich die eingesetzten Partikel unterscheiden können beispielsweise ausgewählt sein aus der Art des verwendeten Polymers, beispielsweise EPS; EPP, E-TPU, E-PVDF, E-PEBA, E-PA, E-PBT E-PET; E-PES; E-PPSU, E-PSU, E-PEI; dem Molekulargewicht, Additiven, der Farbe, der Dichte, der Größe, der Form, der mechanischen Eigenschaften wie E-Modul, Druckfestigkeit, Dämpfungseigenschaften, Rückprallelastizität, Lambda Wert, Brandeigenschaften, oder den elektrischen Eigenschaften.

Gemäß einer weiteren Ausführungsform betrifft die vorliegende Erfindung demgemäß auch ein Verfahren zur Herstellung eines Formkörpers wie zuvor beschrieben, wobei mindestens zwei verschiedene geschäumte Granulate eingesetzt werden, die unterschiedlich gefärbt sind.

Gemäß einer weiteren Ausführungsform betrifft die vorliegende Erfindung auch ein Verfahren zur Herstellung eines Formkörpers wie zuvor beschrieben, wobei mindestens zwei verschiedene geschäumte Granulate eingesetzt werden, die unterschiedliche Partikel aufweisen.

Dabei können die verschiedenen Partikel auf geeignete Weise in die Hülle eingefüllt werden, um die Eigenschaften bzw. Zonen des erhaltenen Formkörpers zu steuern. So kann beispielsweise auch die Oberfläche des erhaltenen Formkörpers strukturiert werden. Gemäß einer weiteren Ausführungsform betrifft die vorliegende Erfindung auch ein Verfahren zur Herstellung eines Formkörpers wie zuvor beschrieben, wobei mindestens zwei verschiedene geschäumte Granulate eingesetzt werden, die unterschiedlich gefärbt sind, die derart in der Hülle angeordnet werden, dass grafische Elemente nach der Verschweißung sichtbar werden.

Bevorzugt werden ca. 10-300g/m² Hüllenmaterial in die äußere Schicht des Formteils eingebracht.

Wählt man farbiges Hüllenmaterial im Gegensatz zu den Partikeln können Farbeffekte erzielt werden die ggf. das Lackieren einsparen können. Transparente Hüllenmaterialien schützen das innere des Formteils vor Beschädigungen und Verunreinigungen, zeigen aber die Struktur und Färbung der ursprünglichen Partikel.

Die Positionierung kann durch Herstellung eines Vorformlings erreicht werden, in dem die Partikel entsprechend der gewünschten Anordnung fixiert werden, der Vorformling dann in die Form eingebracht wird und die Partikel werden verschweißt. Die Partikel können auch direkt in der gewünschten Anordnung in der Form positioniert werden. In anderen technischen Gebieten wie im Fluid-oder Feststoffhandling von z.B. Schüttgut, Geröll, Schlickern oder der Keramikverarbeitung und, Pulvermetallurgie, ist die Simulation von einzelnen Partikelbewegungen durchaus üblich, um die Dichteverteilung im Formteil vorhersagen zu können.

Das Füllen des Vorformlings geschieht beispielsweise durch manuelles Einbringen oder durch Schichten, Schieben, Pressen, Roboterpositionieren, Schleudern oder Einsaugen. Wichtig ist, dass die Partikel so positioniert werden, dass sie anschließend im Formteil die gewünschte Position einnehmen und während des Verschweißprozesses auch behalten. Dies kann beispielsweise durch die o.g. FEM-Simulation vorab simuliert und dementsprechend ausgelegt werden. Geeignete Verfahren sind dem Fachmann an sich bekannt.

Gemäß einer weiteren Ausführungsform betrifft die vorliegende Erfindung demgemäß auch ein Verfahren zur Herstellung eines Formkörpers wie zuvor beschrieben, wobei das Füllen der Hülle durch Schichten, Schieben, Pressen, Roboterpositionieren, Schleudern oder Einsaugen erfolgt.

Der Vorformling kann ausschließlich die Schaumpartikel enthalten, es können aber auch andere Stoffe wie Einleger, Befestigungselemente, Stege, Versteifungselemente, Metallplatten, Netze, Gitter, elektrische oder elektronische Bauteile, Hohlkörper, Schäume, Pasten, Kleber, Gleitmittel, Verarbeitungshilfsmittel PU-Reaktivsysteme innerhalb des Vorformlings positioniert werden. So ist es im Rahmen der vorliegenden Erfindung möglich, Einleger aus einem mit dem Partikelschaum kompatiblem oder einem nicht kompatiblen Stoff in den Vorformling einzubringen. Dadurch können die Eigenschaften des fertigen Formteiles weiter variiert werden. Solche Einleger werden bevorzugt in mechanisch hoch beanspruchten Bauteilen, wie z.B. Sportschuhsohlen, verwendet um eine vorbeschriebene Dynamik der Sohle zu erreichen. Als Stand der Technik werden in diesem Fall später Versteifungselemente oder sogenannte , Torsion bars' auf die Sohle aufgeklebt.

Auch Einleger, wie Sensoren, Kabel, elektrische Elemente sind auf diesem Wege leicht innerhalb eines verschweißten Formkörpers zu positionieren.

Gemäß einer weiteren Ausführungsform betrifft die vorliegende Erfindung demgemäß auch ein Verfahren zur Herstellung eines Formkörpers wie zuvor beschrieben, wobei beim Befüllen gemäß Schritt (ii) weitere Elemente in die Hülle eingefüllt werden.

Gemäß einer weiteren Ausführungsform betrifft die vorliegende Erfindung demgemäß auch ein Verfahren zur Herstellung eines Formkörpers wie zuvor beschrieben, wobei die weiteren Elemente ausgewählt sind aus der Gruppe bestehend aus Einlegern, Befestigungselementen, Stegen, Versteifungselementen, Metallplatten, Netzen, Gittern, elektrischen oder elektronischen Bauteilen, Hohlkörpern, Schäumen, Pasten, Klebern, Gleitmitteln und Verarbeitungshilfsmitteln.

Erfindungsgemäß ist es möglich, die Partikel in der Hülle zu positionieren. Vorteilhaft ist es, wenn die Einzelpartikel bewusst und reproduzierbar positioniert werden. Hierzu werden die Partikel beispielsweise durch Düsen so in das Werkzeug eingeschleust, dass sie genau an der gewünschten Stelle zu liegen kommen. Dies kann per pneumatische Düsen, die auch richtungsbeweglich sein können erfolgen oder das Werkzeug wird so ausgeführt, dass z.B. ein Roboterarm die Positionierung durchführt.

Falls das Einbringen ins Werkzeug durch Luft- oder Fluidströmungen erfolgt oder die Partikel eingeworfen werden, können die Eigenschaften der Partikel selbst zur Bestimmung der Flugbahn genutzt werden. Z.B. durch deren Gewicht, Form, Oberflächenbeschaffenheit auch hier kann Computersimulation unterstützend eingesetzt werden, um die Flugbahn im Voraus zu berechnen.

Die Partikel können auch durch Ansaugen durch Öffnungen im Werkzeug in die gewünschte Position gebracht werden.

Zum Positionieren können Hilfsmittel, wie Kleber verwendet werden. Dies gilt auch für die Befüllung/ Herstellung des Vorformlings. Hierbei handelt es sich um die sog. Discrete Element Method (DEM). Geeignet Simulationsverfahren zur Positionierung der Partikel sind dem Fachmann an sich bekannt. So sind beispielsweise Verfahren zur Simulation des Verhaltens von Partikeln in Fluiden bekannt. Diese können mit einer Kombination aus o.g. DEM- und der CFD-Methode beschrieben werden.

Gemäß einem weiteren Aspekt betrifft die vorliegende Erfindung auch einen Formkörper erhältlich oder erhalten nach einem Verfahren wie zuvor beschrieben.

Die erfindungsgemäßen Formteile können beispielsweise mehrere Zonen aufweisen, beispielsweise mindesten zwei Zonen unterschiedlicher Eigenschaft. Die Lage der Zonen zueinander und deren Lage im Formteil ist dabei in weiten Bereichen variabel.

Die erfindungsgemäßen Formteile zeichnen sich bevorzugt dadurch aus, dass die Eigenschaftsübergänge zwischen den Zonen, falls erwünscht, auch fließend oder dynamisch und nicht nur scharf sein können, wie es bei Formkörperteilen aus einzeln zusammengefügten Teilen der Fall ist.

Die erfindungsgemäßen Formkörper können eine oder mehrere solcher Zonen unterschiedlicher Eigenschaften aufweisen.

Die erfindungsgemäßen Formteile können auch nur zum Teil aus oben beschriebenen Eigenschaften bestehen und mit anderen Formteilkonzepten, wie z.B. Verklebung, formschlüssig verbunden sein. Es können auch Spezialverfahren wie Crackspalt- und/oder Schieberwerkzeuge in Kombination eingesetzt werden.

Sofern die Hülle mit den Partikeln verschweißt wird, weist der Formkörper eine zusätzliche äußere Schicht auf, die die Eigenschaft der Formteile maßgeblich beeinflussen kann verändert.

Diese Eigenschaften können beispielsweise die Farbe, Haptik, Hydrophobie/ Hydrophilie, Druckfestigkeit, Bruchdehnung, Elastizität, Rückprallelastizität, Schubsteifigkeit, Leitfähigkeit sein. Abhängig von der Dicke der aufgebrachten Hülle und dem zugehörigen Volumen und der Dicke der inneren Schicht lassen sich diese Eigenschaften individuell justieren.

Die erfindungsgemäßen Formkörper sind vielfältig einsetzbar. Gemäß einem weiteren Aspekt betrifft die vorliegende Erfindung auch die Verwendung eines Formkörpers erhältlich oder erhalten nach einem erfindungsgemäßen oder eines erfindungsgemäßen Formkörpers als Schuhsohle, Teil einer Schuhsohle, Matratze, Sitzpolster, Unterlage, Griff, Schutzfolie, als Bauteil im Automobilinnen- und -außenbereich, als Gymnastikmatte, Körperprotektor, ein Auskleidungselement im Automobilbau, ein Schalldämpfer, ein Schwingungsdämpfer, eine Polsterung, ein Fahrradsattel, ein Spielzeug, ein Reifen oder ein Reifenteil oder ein Belag für eine Leichtathletiklaufbahn, einen Belag einer Sporthalle oder einen Belag für einen Gehweg, beispielsweise in Form von Bodenfliesen, eine dämpfende Schicht oder ein dämpfender Kern in einem Sandwichelement oder eine Verpackung.

Die nachfolgenden Beispiele dienen der Veranschaulichung der Erfindung, sind aber in keiner Weise einschränkend hinsichtlich des Gegenstands der vorliegenden Erfindung.

### Beispiele

### 1. Beispiel 1

Partikel aus E-TPU 1180 G2 unterschiedlicher Farbe (Weiß und Rot) werden in einen Schlauch aus TPU Nonwoven 25g/m2 geschichtet eingefüllt. Der Schlauch wird unter leichter Vorspannung verschlossen. Der Schlauch wir in eine gelöcherte, dampfdurchlässige Form lose eingelegt. Die Form wird in ein Plattenwerkzeug eingelegt und in einem Erlenbach Formautomaten mit Dampf wie folgt verschweißt.
Dampftemperatur: 105° C
Querdampf 1: 2s 0,5bar
Querdampf 2: 2s 0,5bar
Autoklav bewegliche Seite: 2s 1,6bar
Autoklav feste Seite: 2s 1,6bar
   - Ergebnis:: Formteil locker verschweißt, Dichte ca. 150g/l, keine Verschiebung der Partikel erkennbar, TPU Nonwoven kaum noch erkennbar (aufgeschmolzen), Partikelstruktur wenig ausgeprägt.

### 2. Beispiel 2

Partikel aus E-TPU 1180 G2 werden in einen Schlauch aus TPU 1195D Nonwoven 150 g/m2 geschichtet eingefüllt. Der Schlauch wird unter leichter Vorspannung verschlossen. Der Schlauch wir in eine gelöcherte dampfdurchlässige Form lose eingelegt. Die Form wird in ein Plattenwerkzeug eingelegt und in einem Erlenbach Formautomaten mit Dampf wie folgt verschweißt.
Dampftemperatur: 110° C
Querdampf 1: 2s 0,8bar
Querdampf 2: 2s 0,8bar
Autoklav bewegliche Seite: 2s 1,6bar
Autoklav feste Seite: 2s 1,6bar
   - Ergebnis:: Formteil locker verschweißt, Dichte ca. 150g/l, keine Verschiebung der Partikel erkennbar, TPU Nonwoven noch erkennbar. Partikelstruktur wenig ausgeprägt. Formteil hat eine um 20% höhere Zugfestigkeit als ein Formteil ohne Hülle.

### 3. Beispiel 3

Expandierte Partikel aus Ecoflex (biologisch abbaubarer Polyester der BASF SE) werden in einen Schlauch aus Ecoflex Nonwoven 30g/m2 eingefüllt. Der Schlauch wird unter leichter Vorspannung verschlossen. Der Schlauch wir in eine gelöcherte dampfdurchlässige Form lose eingelegt. Die Form wird in ein Plattenwerkzeug eingelegt und in einem Erlenbach Formautomaten mit Dampf wie folgt verschweißt.
Dampftemperatur: 105° C
Querdampf 1: 2s 0,5bar
Querdampf 2: 2s 0,5bar
Autoklav bewegliche Seite: 2s 1,6bar
Autoklav feste Seite: 2s 1,6bar
   - Ergebnis:: Formteil locker verschweißt, Dichte ca. 150g/l keine Verschiebung der Partikel erkennbar, Nonwoven kaum noch erkennbar (aufgeschmolzen), Partikelstruktur wenig ausgeprägt.

### 4. Beispiel 4

Partikel aus E-TPU 1180 G2 werden in einen Schlauch aus rotem TPU Nonwoven 25g/m2 geschichtet eingefüllt. Der Schlauch wird unter leichter Vorspannung verschlossen. Der Schlauch wir in eine gelöcherte, dampfdurchlässige Form lose eingelegt. Die Form wird in ein Plattenwerkzeug eingelegt und in einem Erlenbach Formautomaten mit Dampf wie folgt verschweißt.
Dampftemperatur: 105° C
Querdampf 1: 2s 0,5bar
Querdampf 2: 2s 0,5bar
Autoklav bewegliche Seite: 2s 1,6bar
Autoklav feste Seite: 2s 1,6bar
   - Ergebnis:: Formteil locker verschweißt, Dichte ca. 150g/l, TPU Nonwovenstruktur kaum noch erkennbar (aufgeschmolzen), das Formteil ist äußerlich rot.

### 5. Beispiel 5

Partikel aus E-TPU Infinergy unterschiedlicher Farbe (weiß und rot) werden in einen Schlauch (Durchmesser 40mm, Länge 150mm aus Nylongewebe 15den) manuell in zwei Schichten eingefüllt. Der Schlauch wird unter leichter Vorspannung verschlossen. Anschließend wird der Schlauch in eine dampfdurchlässige Metallform der Dimension 200X200X60mm eingelegt. Die Form wird in einem Rundscheibenwerkzeug Durchmesser 300mm, Dicke 90mm, positioniert und in einem Formteilautomaten EHV-C 520 / 420 der Firma Erlenbach verschweißt.
Dampftemperatur: 105° C
Querdampf 1: 2s 0,5bar
Querdampf 2: 2s 0,5bar
Autoklav bewegliche Seite: 2s 1,6bar
Autoklav feste Seite: 2s 1,6bar
   - Ergebnis:: Das Formteil wurde mit einer Dichte von 150g/l locker verschweißt, eine Verschiebung der Partikel ist nicht erkennbar, der Nylonschlauch lässt sich nach dem Verschweißvorgang leicht von dem Formteil lösen.

### 6. Beispiel 6

Partikel aus E-TPU Infinergy unterschiedlicher Farbe (weiß und rot) werden in mehrere Schläuche aus Nylongewebe 15den manuell geschichtet eingefüllt. Die Schläuche werden unter leichter Vorspannung verschlossen und anschließend in eine dampfdurchlässige Metallform der Dimension 200X200X60mm eingelegt. Die Form wird in einem Rundscheibenwerkzeug Durchmesser 300mm, Dicke 90mm, positioniert und in einem Formteilautomaten EHV-C 520 / 420 der Firma Erlenbach verschweißt.
Dampftemperatur: 105° C
Querdampf 1: 2s 0,5bar
Querdampf 2: 2s 0,5bar
Autoklav bewegliche Seite: 2s 1,6bar
Autoklav feste Seite: 2s 1,6bar
   - Ergebnis:: Die Formteile wurde mit einer Dichte von 150g/l locker verschweißt, eine Verschiebung der Schläuche oder Partikel gegeneinander ist nicht erkennbar, die Nylonschläuche lassen sich voneinander separieren und die Formteile lassen sich leicht aus den Schläuchen entnehmen.

### 7. Beispiel 7

Partikel aus E-TPU Infinergy unterschiedlicher Farbe (weiß und rot) werden in einen Schlauch (Durchmesser 40mm, Länge 150mm aus Nylongewebe 15den) manuell in zwei Schichten eingefüllt. Der Schlauch wird unter leichter Vorspannung verschlossen. Anschließend wird der Schlauch in eine dampfdurchlässige Metallform der Dimension 200X200X60mm eingelegt. Die Form wird in einem Rundscheibenwerkzeug Durchmesser 300mm, Dicke 90mm, positioniert und in einem Formteilautomaten EHV-C 520 / 420 der Firma Erlenbach verschweißt.
Dampftemperatur: 115° C
Querdampf 1: 2s 0,5bar
Querdampf 2: 2s 0,5bar
Autoklav bewegliche Seite: 2s 1,6bar
Autoklav feste Seite: 2s 1,6bar
   - Ergebnis:: Das Formteil wurde mit einer Dichte von 300g/l zwickelfrei unter Kompression verschweißt, eine Verschiebung der Partikel ist nicht erkennbar, der Nylonschlauch lässt sich nach dem Verschweißvorgang leicht von dem Formteil lösen.

### 8. Beispiel 8

Partikel aus Infinergy E-TPU 1180 G2 unterschiedlicher Farbe (weiß und rot) werden in eine perforierte, dampfdurchlässige Metallform der Dimension 200X200X60mm eingelegt. Die Partikel werden so positioniert, dass ein scharfe vertikale Trennung der roten und weißen Partikelschicht auf 2 Segmente in der Form erfolgt.

Die Form wird in einem Rundscheibenwerkzeug Durchmesser 300mm, Dicke 90mm, positioniert und in einem Formteilautomaten EHV-C 520 / 420 der Firma Erlenbach verschweißt.
Dampftemperatur: 105° C
Querdampf 1: 2s 0,5bar
Querdampf 2: 2s 0,5bar
Autoklav bewegliche Seite: 2s 1,6bar
Autoklav feste Seite: 2s 1,6bar
   - Ergebnis:: Das Formteil wurde mit einer Dichte von 150g/l locker verschweißt, eine Verschiebung der Partikel ist nicht erkennbar, das Formteil lässt sich nach dem Verschweißvorgang leicht aus der Metallform entnehmen.

### 9. Beispiel 9 (Vergleichsbeispiel):

Partikel aus Infinergy E-TPU 1180 G2 werden in eine dampfundurchlässige Polyethylen Folie der Größe 200X200X60mm eingelegt. Der Einlass an welchem die Partikel eingebracht werden wird verschweißt, um die gesamte Folie Dampfundurchlässig zu machen. Die eingelegten Partikeln werden in einer quadratischen Form der Größe 200 mm * 20 mm eingelegt und mit Wasserdampf beaufschlagt, um diese zu verschweißen.
Die Verschweißung erfolgte in einem Formteilautomaten der Fa. Kurtz ersa GmbH (Energy Foamer K68).
Dampftemperatur: 150°C
Querdampf 1: 40s 1,3bar
Querdampf 2: 20s 1,1bar
Autoklav bewegliche Seite: 10s 0,8bar
Autoklav feste Seite: 10s 1,3bar
   - Ergebnis:: Im Vergleich zu den Beispielen 1 bis 8 wurde hier eine erhöhte Energiezufuhr verwendet (längere Dampfzeiten und zum Teil höhere Dampfdrücke) welche eine Verschweißung zusätzlich begünstigen. Trotzdem verschweißen die Partikel in der dampfundurchlässigen Polyethylen Folie nicht, sondern liegen weiterhin lose in der Folie.

## Patentansprüche

1. Verfahren zur Herstellung eines Formkörpers (FK), umfassend die Schritte
(i) Bereitstellen einer dünnwandigen, gasdurchlässigen Hülle;
(ii) Befüllen der Hülle mit einem geschäumten Granulat aus einem Polymer (P1);
(iii) Verschweißen des geschäumten Granulats unter Erhalt des Formkörpers (FK).

2. Verfahren gemäß Anspruch 1, wobei das Verschweißen durch Wasserdampfverschweißung erfolgt.

3. Verfahren gemäß Anspruch 1 oder 2, wobei die Hülle porös ist.

4. Verfahren gemäß einem der Ansprüche 1 bis 3, wobei die Hülle eine Folie, ein Gewebe, ein Gestrick, ein Netz oder ein gelochtes Metall ist.

5. Verfahren gemäß einem der Ansprüche 1 bis 4, wobei die Hülle aus einem flexiblen porösen Material besteht.

6. Verfahren gemäß einem der Ansprüche 1 bis 5, wobei die Hülle nach dem Befüllen gemäß Schritt (ii) verschlossen wird.

7. Verfahren gemäß einem der Ansprüche 1 bis 6, wobei die Hülle aus einem mit dem geschäumten Granulat verschweißbaren Material besteht.

8. Verfahren gemäß einem der Ansprüche 1 bis 6, wobei die Hülle nach dem Verschweißen vom Formkörper entfernt wird.

9. Verfahren gemäß einem der Ansprüche 1 bis 8, wobei das Polymer (P1) ausgewählt ist aus der Gruppe bestehend aus Polystyrol, Polypropylen, Polyethylen, Ethylenpropylendien-Kautschuke (EPDM), Ethylen-Vinylacetat (EVA), Ethylen-Vinylacetat-Copolymere, thermoplastischen Polyurethanen, Polyamiden, Polyestern, Polyvinylidenfluorid, Polyethramiden, Polyethylenterephthalaten Polybutylenterephthalaten und Mischungen und Blends oder genannten Polymere.

10. Verfahren gemäß einem der Ansprüche 1 bis 9, wobei mindestens ein weiteres geschäumtes Granulat eingesetzt wird.

11. Verfahren gemäß einem der Ansprüche 1 bis 10, wobei mindestens zwei verschiedene geschäumte Granulate eingesetzt werden, die unterschiedlich gefärbt sind.

12. Verfahren gemäß einem der Ansprüche 1 bis 11, wobei mindestens zwei verschiedene geschäumte Granulate eingesetzt werden, die unterschiedlich Partikel aufweisen.

13. Verfahren gemäß einem der Ansprüche 1 bis 12, wobei mindestens zwei verschiedene geschäumte Granulate eingesetzt werden, die unterschiedlich gefärbt sind, die derart in der Hülle angeordnet werden, dass grafische Elemente nach der Verschweißung sichtbar werden.

14. Verfahren gemäß einem der Ansprüche 1 bis 13, wobei das Füllen der Hülle durch Schichten, Schieben, Pressen, Roboterpositionieren, Schleudern oder Einsaugen erfolgt.

15. Verfahren gemäß einem der Ansprüche 1 bis 14, wobei die Partikel gezielt in der Hülle positioniert werden.

16. Verfahren gemäß einem der Ansprüche 1 bis 15, wobei zum gezielten Einbringen der Partikel in die Hülle eine Computersimulation verwendet wird.

17. Verfahren gemäß einem der Ansprüche 1 bis 16, wobei beim Befüllen gemäß Schritt (ii) weitere Elemente in die Hülle eingefüllt werden, wobei die weiteren Elemente ausgewählt sind aus der Gruppe bestehend aus Einlegern, Befestigungselementen, Stegen, Versteifungselementen, Metallplatten, Netzen, Gittern, elektrischen oder elektronischen Bauteilen, Hohlkörpern, Schäumen, Pasten, Klebern, Gleitmitteln und Verarbeitungshilfsmitteln.

18. Verfahren gemäß einem der Ansprüche 1 bis 17, wobei der mittlere Durchmesser der Partikel des geschäumten Granulats im Bereich von 0,5 bis 20 mm liegt.

19. Formkörper erhältlich oder erhalten nach einem Verfahren gemäß einem der Ansprüche 1 bis 18.

20. Verwendung eines Formkörpers erhältlich oder erhalten nach einem Verfahren gemäß einem der Ansprüche 1 bis 18 oder eines Formkörpers gemäß Anspruch 19 als Schuhsohle, Teil einer Schuhsohle, Matratze, Sitzpolster, Unterlage, Griff, Schutzfolie, als Bauteil im Automobilinnen- und -außenbereich, als Gymnastikmatte, Körperprotektor, ein Auskleidungselement im Automobilbau, ein Schalldämpfer, ein Schwingungsdämpfer, eine Polsterung, ein Fahrradsattel, ein Spielzeug, ein Reifen oder ein Reifenteil oder ein Belag für eine Leichtathletiklaufbahn, ein Belag für eine Sporthalle oder einen Gehweg, eine dämpfende Schicht oder ein dämpfender Kern in einem Sandwichelement oder eine Verpackung.

## Claims

1. A process for producing a molded article (M), comprising the steps of
(i) providing a thin-walled, gas-permeable shell;
(ii) filling the shell with a foamed pelletized material made of a polymer (P1);
(iii) welding the foamed pelletized material to obtain the molded article (M).

2. The process according to claim 1, wherein the welding is effected by steam welding.

3. The process according to claim 1 or 2, wherein the shell is porous.

4. The process according to any of claims 1 to 3, wherein the shell is a film, a weave, a knit, a mesh or a perforated metal.

5. The process according to any of claims 1 to 4, wherein the shell consists of a flexible porous material.

6. The process according to any of claims 1 to 5, wherein the shell is closed after the filling in step (ii) .

7. The process according to any of claims 1 to 6, wherein the shell consists of a material which is weldable with the foamed pelletized material.

8. The process according to any of claims 1 to 6, wherein the shell is removed from the molded article after the welding.

9. The process according to any of claims 1 to 8, wherein the polymer (P1) is selected from the group consisting of polystyrene, polypropylene, polyethylene, ethylene-propylene-diene rubbers (EPDM), ethylene-vinyl acetate (EVA), ethylene-vinyl acetate copolymers, thermoplastic polyurethanes, polyamides, polyesters, polyvinylidene fluoride, polyetheramides, polyethylene terephthalates, polybutylene terephthalates and mixtures and blends of the polymers mentioned.

10. The process according to any of claims 1 to 9, wherein at least one further foamed pelletized material is used.

11. The process according to any of claims 1 to 10, wherein at least two different foamed pelletized materials of different color are used.

12. The process according to any of claims 1 to 11, wherein at least two different foamed pelletized materials having different particles are used.

13. The process according to any of claims 1 to 12, wherein at least two different foamed pelletized materials of different color are used, which are arranged in the shell in such a way that graphic elements become visible after the welding.

14. The process according to any of claims 1 to 13, wherein the shell is filled by layering, pushing, pressing, robot positioning, spinning or suction.

15. The process according to any of claims 1 to 14, wherein the particles are positioned in the shell in a controlled manner.

16. The process according to any of claims 1 to 15, wherein the controlled introduction of the particles into the shell is accomplished using a computer simulation.

17. The process according to any of claims 1 to 16, wherein further elements are introduced into the shell in the course of filling in step (ii), wherein the further elements are selected from the group consisting of inserts, securing elements, struts, reinforcing elements, metal plates, meshes, grids, electrical or electronic components, hollow bodies, foams, pastes, adhesives, lubricants and processing auxiliaries.

18. The process according to any of claims 1 to 17, wherein the average diameter of the particles of the foamed pelletized material is in the range from 0.5 to 20 mm.

19. A molded article obtainable or obtained by a process according to any of claims 1 to 18.

20. The use of a molded article obtainable or obtained by a process according to any of claims 1 to 18 or of a molded article according to claim 19 as footwear sole, part of a footwear sole, mattress, seat cushion, underlay, grip, protective film, as component in automobile interiors and exteriors, as gymnastics mat, body protector, a trim element in automobile construction, a sound insulator, a vibration damper, a cushion, a bicycle saddle, a toy, a tire or part of a tire or a covering for a track and field surface, a covering for a sports hall or a pathway, a damping layer or a damping core in a sandwich element or a packaging.

## Revendications

1. Procédé de fabrication d'un corps façonné (FK), comprenant les étapes
(i) mise à disposition d'une enveloppe à paroi mince, perméable aux gaz ;
(ii) remplissage de l'enveloppe par un granulat moussé constitué par un polymère (P1) ;
(iii) soudage du granulat moussé avec obtention du corps façonné (FK).

2. Procédé selon la revendication 1, le soudage ayant lieu par soudage à la vapeur d'eau.

3. Procédé selon la revendication 1 ou 2, l'enveloppe étant poreuse.

4. Procédé selon l'une des revendications 1 à 3, l'enveloppe étant une feuille, un tissu, un tricot, un filet ou un métal perforé.

5. Procédé selon l'une des revendications 1 à 4, l'enveloppe étant constituée par un matériau poreux souple.

6. Procédé selon l'une des revendications 1 à 5, l'enveloppe étant fermée après le remplissage selon l'étape (ii).

7. Procédé selon l'une des revendications 1 à 6, l'enveloppe étant constituée par un matériau pouvant être soudé avec le granulat moussé.

8. Procédé selon l'une des revendications 1 à 6, l'enveloppe étant enlevée du corps façonné après le soudage.

9. Procédé selon l'une des revendications 1 à 8, le polymère (P1) étant choisi dans le groupe constitué par le polystyrène, le polypropylène, le polyéthylène, les caoutchoucs d'éthylène-propylène-diène (EPDM), l'éthylène-acétate de vinyle (EVA), les copolymères d'éthylène-acétate de vinyle, les polyuréthanes thermoplastiques, les polyamides, les polyesters, les poly(fluorure de vinylidène), les polyétheramides, les poly(téréphtalates d'éthylène), les poly(téréphtalates de butylène) et les mélanges et alliages des polymères mentionnés.

10. Procédé selon l'une des revendications 1 à 9, au moins un autre granulat moussé étant utilisé.

11. Procédé selon l'une des revendications 1 à 10, au moins deux granulats moussés différents, qui sont colorés différemment, étant utilisés.

12. Procédé selon l'une des revendications 1 à 11, au moins deux granulats moussés différents, qui présentent des particules différentes, étant utilisés.

13. Procédé selon l'une des revendications 1 à 12, au moins deux granulats moussés différents, qui sont colorés différemment, étant utilisés et agencés dans l'enveloppe de manière telle que des éléments graphiques deviennent visibles après le soudage.

14. Procédé selon l'une des revendications 1 à 13, le remplissage de l'enveloppe ayant lieu par stratification, coulissement, pressage, positionnement au robot, centrifugation ou aspiration.

15. Procédé selon l'une des revendications 1 à 14, les particules étant positionnées de manière ciblée dans l'enveloppe.

16. Procédé selon l'une des revendications 1 à 15, une simulation à l'ordinateur étant mise en œuvre pour l'introduction ciblée des particules.

17. Procédé selon l'une des revendications 1 à 16, d'autres éléments étant introduits dans l'enveloppe lors du remplissage selon l'étape (ii), les autres éléments étant choisis dans le groupe constitué par les inserts, les éléments de fixation, les âmes, les éléments raidisseurs, les plaques métalliques, les filets, les treillis, les composants électriques ou électroniques, les corps creux, les mousses, les pâtes, les adhésifs, les lubrifiants et les adjuvants de mise en oeuvre.

18. Procédé selon l'une des revendications 1 à 17, le diamètre moyen des particules du granulat moussé étant situé dans la plage de 0,5 à 20 mm.

19. Corps façonné, obtenu ou pouvant être obtenu selon un procédé selon l'une des revendications 1 à 18.

20. Utilisation d'un corps façonné obtenu ou pouvant être obtenu selon un procédé selon l'une des revendications 1 à 18 ou d'un corps façonné selon la revendication 19 comme semelle, partie d'une semelle, matelas, coussin de siège, support, poignée, feuille de protection, comme composant à l'intérieur ou à l'extérieur d'une voiture, comme tapis de gymnastique, protection corporelle, élément de revêtement dans la construction des voitures, amortisseur de bruit, amortisseur de vibrations, rembourrage, selle de bicyclette, jouet, pneu ou partie de pneu ou revêtement pour une piste d'athlétisme, revêtement pour un hall de sport ou une allée, couche d'amortissement ou noyau d'amortissement dans un élément sandwich ou un emballage.
